# EUROPEAN PATENT SPECIFICATION

(11) **EP 2 481 224 B1**
(45) Date of publication and mention of the grant of the patent: **10.07.2013**
(21) Application number: 10760858.0
(22) Date of filing: 22.09.2010
(51) Int. Cl.: H04W 4/06, H04W 52/02

(54) **SYSTEM FOR POWER-EFFICIENTLY DELIVERING PERSONALIZED CONTENTS**
SYSTEM ZUR ANLIEFERUNG VON PERSONALISIERTEN INHALTEN IN ENERGIESPARENDER WEISE
SYSTEME DE DELIVRANCE DE CONTENU PERONALISE ECONOMISANT L'ENERGIE

(30) Priority: 23.09.2009 US 565581
(43) Date of publication of application: 01.08.2012
(73) Proprietor: Qualcomm Incorporated, San Diego CA 92121-1714 (US)
(72) Inventor: GAO, Qiang, San Diego CA 92121-1714 (US); CHEN, An, Mei, San Diego CA 92121-1714 (US); GOLMIEH, Ralph, A., San Diego CA 92121-1714 (US)
(74) Representative: Cupitt, Philip Leslie
(86) International application number: PCT/US2010/049875
(87) International publication number: WO 2011/038035

(56) References cited:
- EP-A1- 1 180 862
- WO-A1-2005/048601
- WO-A2-2005/101411
- WO-A2-2007/066975

## Description

### BACKGROUND

Wireless communication technologies have seen explosive growth over the past few years. This growth has been fueled by wireless services providing freedom of movement to the mobile public, and cutting the tether to hardwired communication systems. As a result of service enhancements, the popularity of wireless services is expected to continue to grow rapidly. A recent addition to wireless communication services has been the ability to broadcast television and other content to mobile devices. Mobile multimedia broadcast services allow users to view TV programming, as well as receive mobile editions of news, entertainment, sports, business, and other programming, using their cell phone or other wireless mobile device configured to receive the mobile broadcast transmissions.
EP 1180862 relates to a method for a broadcast receiver to access additional services broadcast besides a main service. Service information is included and transmitted within a main service currently received by a receiving device. The receiving device extracts service information from a main service being received, the service information relating to at least one additional service.
WO 2005/048601 relates to a system and a method for program recommendation. Content pieces are given a piece score and sequences of content pieces are given a sequence score, which is based on the pieces scores and a correlation of content description of at least two pieces of content. A recommended sequence is chosen according to the sequence score.

### SUMMARY

In accordance with the invention, there is provided: a method for broadcasting content in a mobile multimedia broadcast system as recited in claim 1; a method for a mobile device as recited in claim 8; an apparatus as recited in claim 14; and a computer-readable medium as recited in claim 15.

The various embodiments enable mobile devices to efficiently receive content corresponding to a user's selections by identifying content of interest based upon content description messages transmitted in a content description flow portion of mobile broadcast transmissions. A content description flow may be a low data rate portion of the mobile broadcast transmissions comprising data packets which include information about the nature of content elements to be broadcast. Information in the content description flow enables mobile devices to determine if the content is of interest to their user, and receive those contents determined to be of interest. Using the information in the content description flow, a mobile device can determine whether a particular portion of content is of interest, as well as when the content will be broadcast and the content flow address or identifier on which it can be received. Enabling mobile devices to screen broadcast content flows by monitoring the content description flow for content of interest can extend their battery life since the content description flow can be quickly downloaded and the receiver de-energized if no content is of interest to the user.

### BRIEF DESCRIPTION OF THE DRAWINGS

The accompanying drawings, which are incorporated herein and constitute part of this specification, illustrate exemplary embodiments of the invention, and together with the general description given above and the detailed description given below, serve to explain the features of the invention.

Fig. 1 is a communication system block diagram illustrating a mobile multimedia broadcast communication system suitable for use in an embodiment.

FIG. 2 is an alternative representation of a communication system block diagram of a mobile multimedia broadcast system.

FIG. 3 is an illustration of an Internet webpage illustrating content elements which may be broadcast separately in a mobile multimedia broadcast system.

FIG. 4 is a communication flow schematic illustrating how content packages may be organized for broadcast in a mobile multimedia broadcast system.

FIG. 5 is a communication flow schematic illustrating how content package description may be organized according to an embodiment.

FIG. 6 is an illustration of a Content Description Flow (CDF) message according to an embodiment.

FIG. 7 is a communication flow schematic illustrating how CDF messages relate in time to content packages broadcast in a mobile multimedia broadcast system according to an embodiment.

FIG. 8 is a process flow diagram of an embodiment method for receiving broadcast content based upon received content packet descriptions according to an embodiment.

FIG. 9 is a message flow diagram illustrating messages and processes illustrated in FIG. 8.

FIG. 10 is a message flow schematic illustrating timing considerations between broadcast of content packet messages and broadcast times for corresponding content packages according to an embodiment.

FIG. 11 is a message flow schematic illustrating timing relationships between content packet description flows and corresponding content flows in a mobile multimedia broadcast network according to an embodiment.

FIG. 12 is a process flow diagram of an embodiment method for generating and broadcasting content packet description messages according to an embodiment.

FIG. 13 is a component block diagram of a mobile device suitable for use in an embodiment.

FIG. 14 is a component block diagram of a server device suitable for use in an embodiment.

### DETAILED DESCRIPTION

The various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention or the claims.

The word "exemplary" is used herein to mean "serving as an example, instance, or illustration." Any implementation described herein as "exemplary" is not necessarily to be construed as preferred or advantageous over other implementations.

The terms "mobile device" and "receiver device" are used interchangeably herein to refer to any one or all of cellular telephones, personal data assistants (PDA's), palm-top computers, wireless electronic mail receivers (e.g., the Blackberry® and Treo® devices), multimedia Internet enabled cellular telephones (e.g., the Blackberry Storm®), Global Positioning System (GPS) receivers, wireless gaming controllers, and similar personal electronic devices which include a programmable processor and memory and mobile multimedia broadcast receiver circuitry for receiving and processing mobile multimedia broadcast transmissions.

The word "broadcast" is used herein to mean the transmission of data (information packets) so that it can be received by a large number of receiving devices simultaneously. Examples of a broadcast message are mobile television service broadcast signals, including content broadcasts (content flow) and overhead information broadcasts (overhead flow) such as metadata messages.

Mobile multimedia receiver devices are different from traditional television sets in that the receiver devices are portable. Consequently, mobile devices configured to receive mobile multimedia broadcast services must be self-contained and designed to operate for extended periods of time on battery power. The need to be battery powered presents unique challenges to mobile multimedia broadcast systems. Mobile multimedia broadcast networks broadcast information in formats that enable mobile devices to selectively tune-in to receive desired content and de-energize their broadcast receiver whenever the desired content is not being broadcast. As a result of the data transmission structure, mobile multimedia receiver devices typically activate their receiver circuitry for a small percentage of the time, thereby reducing the amount of power required to receive desired content. Further, information about programs and content are broadcast in advance so that mobile devices can determine just when to tune-in to receive a selected content.

Mobile multimedia broadcast services enable mobile devices to be self-contained by broadcasting information about the programs and content that will be broadcast in the future via a portion of broadcast transmissions dedicated to carrying overhead information (referred to herein as the "overhead flow" or the "content description flow") which is separate from the portion of the broadcast transmissions that carry the content (referred to herein as "content flow"). This information about the content information, or "metadata," enables mobile devices to discover how and when to receive selected content. Mobile devices can also process this metadata to provide users with an electronic viewing guide. Such an electronic viewing guide, which is known in some mobile multimedia formats as a "service guide" or "electronic service guide" (ESG), is a viewable program guide similar to that available on cable and satellite television systems. The electronic viewing guide provided on mobile multimedia broadcast networks enables users to see what programming and content is available, when and on what "channel." The electronic viewing guide may be presented in a graphical user interface format so that users can easily designate a program for viewing or content for download by selecting it within a display of future programs and content. In addition to identifying the start time and broadcast address for particular programs and content, the broadcast metadata may also include information regarding the nature of the content to be broadcast.

The various embodiments facilitate transmission of a variety of different content types that users can select for reception or download, thereby expanding the range of services that can be provided by mobile multimedia broadcast networks. The service guide information provided by conventional mobile multimedia broadcast networks, which resembles program guides provided on cable and satellite multimedia networks, works well for television format programs since such content runs for a significant period of time and are identified by a single program title (e.g., "Friends"). However, for scheduling different types of content, such as website updates, weather alerts, stock quotes, etc., which may involve frequent and very short broadcasts, conventional program guides may not provide an optimal user interface. Instead, it may be desirable to permit users to specify in advance the types of content desired and enable mobile devices to automatically watch for, recognize and download content matching the user's preferences. By enabling users to identify the types of content they want in advance, the various embodiments provide a new personalized content delivery service beyond the traditional linear broadcast multimedia in a broadcast network in an efficient manner.

The various embodiments enable mobile devices to efficiently receive mobile broadcast content corresponding to a user's selections based upon content description metadata transmitted in a content description flow portion of broadcast transmissions. A content description flow may be in the form of broadcast data packets which include information about the nature of content elements to be broadcast. Using the information in the content description flow, a mobile device can determine whether a particular content or portion of content is of interest, as well as when the content will be broadcast and the content flow address on which it can be received. Enabling mobile devices to screen broadcast content flows by monitoring the content description flow for content of interest can extend their battery life since the content description flow can be quickly downloaded and the receiver de-energized if no content is of interest to the user.

The various embodiments enable mobile multimedia broadcast services to deliver various kinds of contents to mobile devices in an efficient manner. For example, mobile multimedia broadcast services can be configured to deliver video clips, podcasts, webpage packages, stock updates, targeted advertisements, music downloads and music videos, and RSS (Really Simple Syndication) feeds, which are a family of Web feed formats used to publish frequently updated works-such as blog entries, news headlines, audio, and video-in a standardized format. Such materials may be broadcast together in combination with some metadata which describes their contents and specifies the broadcast window. Receiving devices may be configured with a user interface that enables users to specify the kinds of content (e.g., sports, news, financial news, movie trailers, video features, etc.) they are interested in receiving. Receiving devices then use the user selections to monitor the broadcasted content metadata to identify matches. When a content description metadata matches a user selected kind of content, receiving devices use the content information in the metadata to determine the time and network address for receiving the content. Using that information, the receiving devices can automatically receive the corresponding content within the respective broadcast windows. Such received content may then be cached in memory and presented to the user on demand.

Various embodiments enable personalized content delivery over a mobile broadcast network in an efficient manner by delivering the same content to a large number of users, with the receiving devices selecting only those contents of interest to their user. This delivery mechanism provides a smooth user interface since the personalized contents are automatically updated and saved so that they may be accessed instantly by the user, obviating the apparent download delay associated with other electronic content delivery services. This delivery mechanism is also energy efficient since the receiving device only needs to activate its receiving circuitry to receive the contents matching the user's interests, and only during their broadcast windows. This content delivery mechanism further enables content updates on a dynamic and frequent basis.

Providing more information about the information in the available content enables users and mobile devices to make more intelligent selections of content for viewing or download. This in turn enables mobile multimedia broadcast services to distribute a wide variety of content in addition to television programming. For example, broadcast content may include Internet webpages (e.g., webpages available at a particular URL, like www.cnn.com), tabulated data (e.g., stock quotes, sports scores, schedules, directories, etc.), images, video clips, audio recordings (e.g., music for download or streaming), etc. To enable users to select particular content from such a variety of content sources, the metadata may include specific details about the content on which the mobile device can index or search.

The content metadata referred to herein as "content description flow messages," "Content Description Flow" or "CDF" may be transmitted in an overhead flow which is a low data rate portion of the mobile multimedia broadcast signal suitable for carrying overhead information like the program and content metadata. In contrast to this overhead flow, programs and content are broadcast via high data rate portions of the broadcast signal, which are collectively referred to herein as the "content flow."

A number of different mobile broadcast television services and broadcast standards are available or contemplated in the future, all of which may implement and benefit from the various embodiments. Such services and standards include Open Mobile Alliance Mobile Broadcast Services Enabler Suite (OMA BCAST), MediaFLO, Digital Video Broadcast IP Datacasting (DVB-IPDC), and China Multimedia Mobile Broadcasting (CMMB). While the broadcast formats and terminology vary among the different mobile multimedia broadcast service standards, they all employ metadata transmissions to enable mobile devices to receive selected content and inform users of programs and content available for viewing or download. To avoid confusion regarding particular broadcast standards, the generic terms content flow, overhead flow, and metadata messages are used herein to describe the various embodiments.

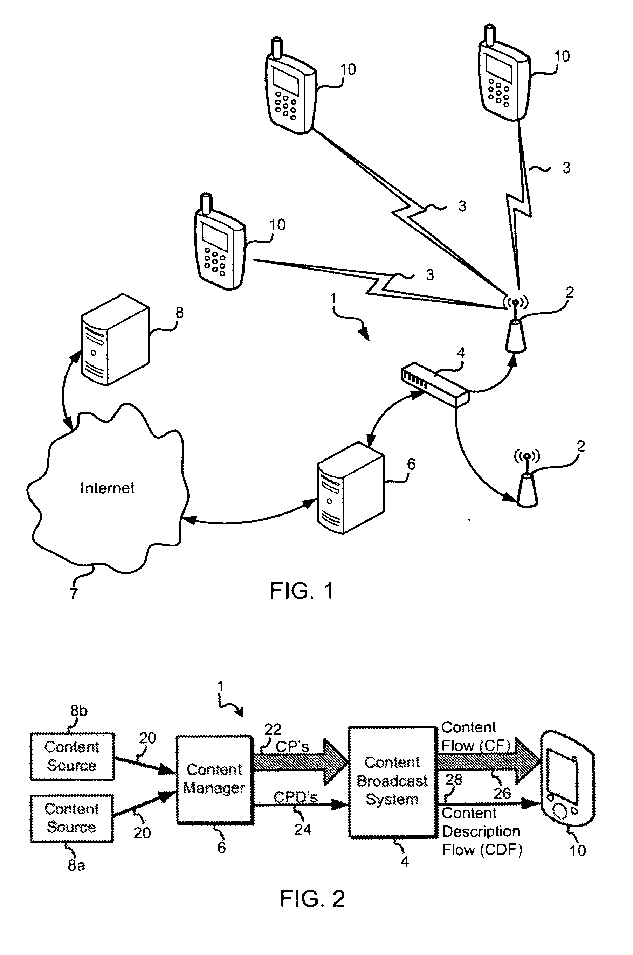

Example components of a typical mobile multimedia broadcast system are illustrated in FIG. 1. A mobile multimedia broadcast network 1 typically includes a plurality of broadcast transmitters 2 controlled by a mobile broadcast network control center 4. The mobile multimedia broadcast network 1 broadcasts content from the broadcast transmitters 2 as mobile broadcast transmissions 3 for reception by mobile devices 10. Within the mobile broadcast network control center 4 will typically be one or more servers 106 which may be configured to manage the scheduling of content broadcasts, generation of electronic service guides and other metadata regarding the content broadcasts, and generation of metadata messages for broadcast via the overhead flow of the mobile multimedia broadcast network 1. One or more servers 6 may also include connections to an external network, such as the Internet 7, through which the server 6 may receive content feeds from content provider servers 8. One or more servers 6 may be configured according to the various embodiments to receive content from content provider servers 8, determine information about the received content to be included in metadata, determine a schedule for broadcast of the content in content batches, generate metadata messages including metadata regarding the content (including broadcast times), determine a time for a next update of the metadata, include information regarding the time for the next metadata update in the metadata messages, and provide the metadata messages to the mobile multimedia broadcast network 1 for broadcast to mobile devices 10.

Typically, mobile multimedia broadcast service providers receive a variety of different programs and content from different content sources and content providers. The mobile multimedia broadcast service provider typically stores content in a server, schedules broadcast windows for each content, and then broadcasts the content in batches which are also referred to as content packages. A broadcast window is a period of time in which a particular content is to be broadcast. To enable mobile devices to receive the content, the mobile multimedia broadcast service provider server will generate metadata messages for transmission via the overhead flow that inform mobile devices when each program or content will be transmitted and the broadcast address on which the transmission will be made. Mobile devices can use the information in the metadata messages to determine if any of the content has been selected by the user for reception or download and, if so, determine the time to tune-in to the broadcast transmissions and the network address on which to receive the selected content.

FIG. 2 illustrates information flows within a mobile multimedia broadcast network 1 according to an embodiment. As mentioned above, a mobile multimedia broadcast network 1 may receive content (e.g., television programs websites, serial data feeds, etc.) from a number of content sources 8a, 8b. Such content may be provided to a content manager server 6 within a mobile multimedia broadcast network 1 via data networks 20 (e.g., the Internet 7). The content manager server 6 may store such content in a database and scheduled the content for broadcast. In scheduling content for broadcast, the content manager server 6 determines what will be broadcast when and on which network address. As part of scheduling, the content manager server 6 may format the content into content packages (CPs). The content manager server 6 can also determine information about the content, such as a title of the information, its source (e.g., an Internet address, URL or producer), the nature of the information (e.g., sports, news, finance, etc.), its age or date/time of creation, and other information about the content that may be useful for selecting content matching user preferences. The content manager server 6 may combine the scheduled broadcast time and address with the other information regarding the content to generate content packet descriptions (CPDs). When content is scheduled for broadcast, the content manager server 6 may provide the content packages to the content broadcast system 4 in an internal network dataflow 22, along with the content packet descriptions in an internal network dataflow 24. These data flows are then processed by the content broadcast system 4 into a multiplex broadcast waveform which are broadcast live by the network transmitters 2 as broadcast transmissions. Within the broadcast transmissions there may be several different content flows (CF) 26 which are data packets carrying the broadcast content, as well as content description flows (CDF) 28 which are data packets carrying the content packet descriptions. Mobile devices 10 receive the broadcast transmissions and are able to separately process content flow 26 and the content description flow 28.

A typical mobile multimedia broadcast network transmits content on a plurality of different channels or flows, thereby enabling several different programs to be broadcast simultaneously. Due to the nature of the broadcast transmission waveform, the plurality of different channels or flows may be carried over the same radio frequency spectrum, but include a structure and information that enables each of the channels or flows to be selected and received by the mobile devices 10. Individual channels or flows may be identified by an address or a flow identifier (ID). Information within the content description flow enables mobile devices 10 to determine the particular address or flow ID to access in order to receive particular content.

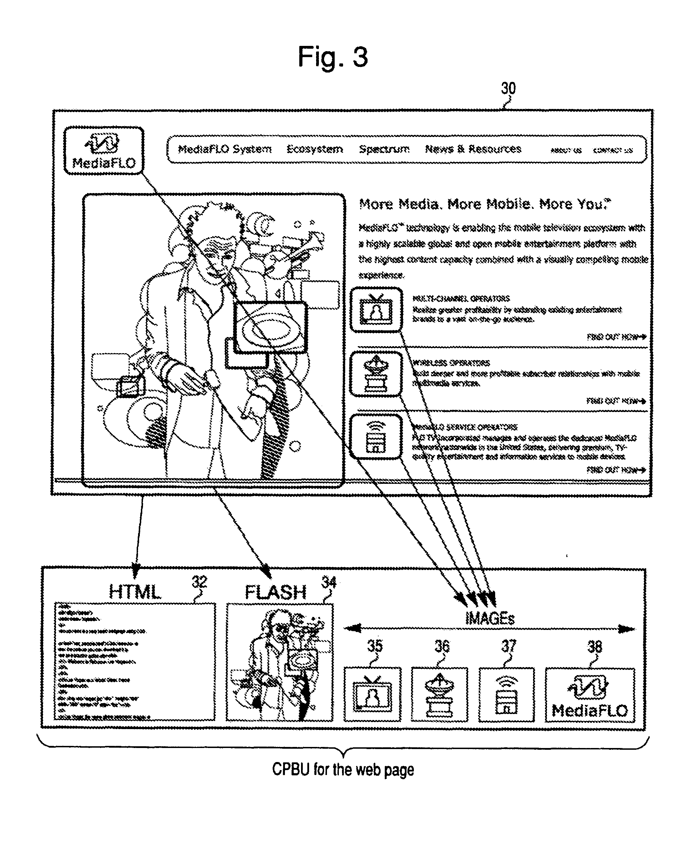

FIG. 3 shows an internet webpage 30 illustrating how content broadcast on a mobile multimedia broadcast system may include a number of content elements which may be communicated in separable units. For example, a webpage 30 will typically include a hypertext markup language (HTML) file 32, one or more images 35, 36, 37, 38 and more complex content such as a flash file 34. When a webpage 30 is received by a mobile device, the various components are assembled by a web browser application into the complete webpage image. However, individual elements of a webpage may be the particular content that the user is interested in receiving. For example, a user may only be interested in viewing the FLASH file 34 or a video file. Thus, there may be advantages to enabling mobile devices 10 to identify and receive just selected components of broadcast content that are broadcast on the content package broadcast units (CPBU) level. This capability may enable users to personalize their content to a finer level of detail than possible if selections are limited to programs or content packages.

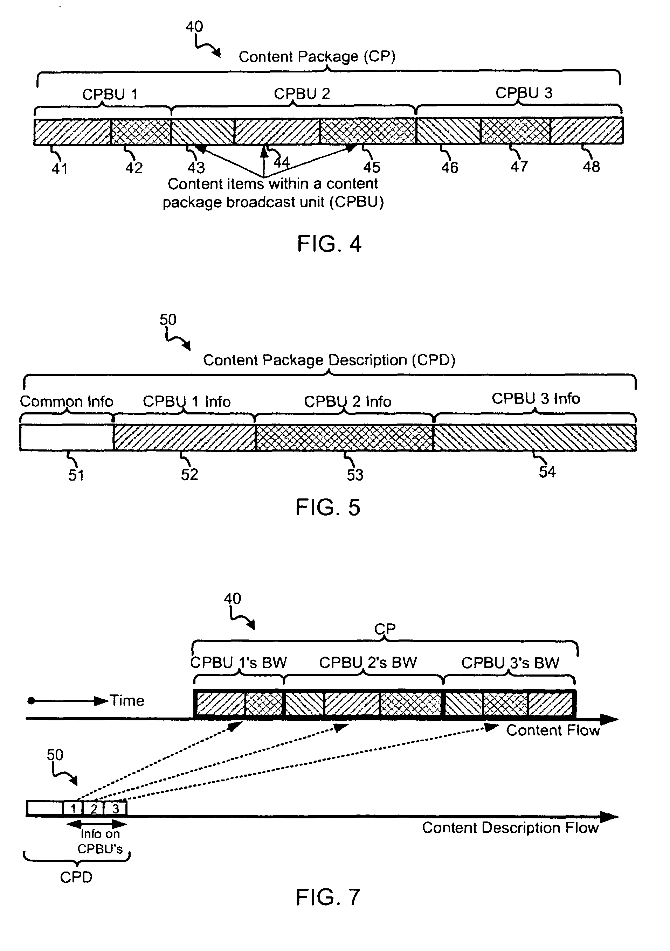

A mobile multimedia broadcast system may broadcast content in the form of content packages (CP) 40 as illustrated in FIG. 4. Content packages 40 may be broadcast on any of the number of the content flows within the broadcast transmission. A particular content package may be made up of a group of content package broadcast units (e.g., CPBU 1-3) that are related to single document or source. For example, a content package 40 may be an assembly of webpages, a video clip, or a text list. Further, content package broadcast units (CPBU) may be made up of one or more content items 41-48. For example, a first content package broadcast unit CPBU 1 may be made up of two content items 41, 42, while a second content broadcast unit CPBU 2 may be made up of three content elements 43, 44, 45. A content element may be a particular portion of the content within a content package broadcast unit, such as an HTML script 32, an image or icon 35, 36, 37, 38 or a flash component 34 as illustrated in FIG. 3. It should be appreciated that FIG. 4 is provided for illustration purposes only and is not intended to limit the manner in which content data is encoded into packets which will depend upon the type of mobile multimedia broadcast technology that is implemented.

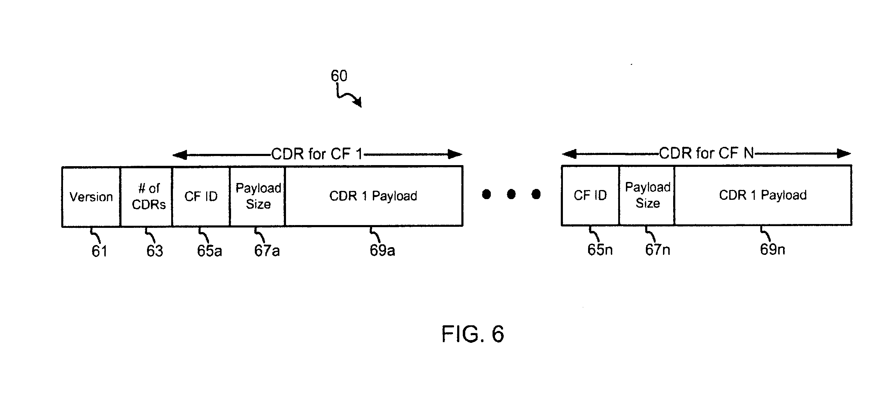

As mentioned above, the various embodiments provide information regarding broadcast content packages to enable mobile devices to determine whether any content matches user preference selections. This may be accomplished by broadcasting descriptions of the contents which are referred to as content package descriptions 50, an example of which is illustrated FIG. 5. In the illustrated example embodiment, a Content Description Flow (CDF) may be made up of a plurality of broadcast units 51-54. For example, a first broadcast unit 51 may be used to communicate common information regarding all of the units within the content package description 50. For example, the common information may include a version number so that receiver devices can determine whether the content package description 50 is new or a repeat of a prior broadcast content package description. Such information is valuable since, as described more fully below, content package descriptions are broadcast repeatedly in the time leading up to broadcast of the corresponding content packages. Common information may also include overhead information that a mobile device needs in order to properly receive selected content. A content package description 50 may also include a plurality of CPBU information (CDPU 1-3 info) 52, 53, 54. These content description package units communicate information regarding particular content package broadcast units as described more fully below with reference to FIG. 6 and 7.

Further details regarding an example CDF message 60 are illustrated in FIG. 6. As mentioned above, a first portion of the CDF message 60 may include common information such as a version number 61 and a number of the content description records contained within the CDF message 63. Such common information enables the receiver device to determine whether it needs to receive and process the particular CDF message 60, as well as information that enables it to process the message (e.g., the number of content description records to be parsed within the message).

A CDF message 60 may include a number of content description records (CDRs) each conveying information regarding content that will be broadcast on a particular content flow ID or address. Content package description 60 may include as many content description records as there are separate content flows within the broadcast transmission. A content description record for a content flow, such as content flow 1, may include a content flow ID 65a or address which identifies the particular content flow on which the described content package is transmitted. The content description record may further include information to facilitate reception of the content description record, such as the payload size 67a, as well as the content description record payload 69a. Using the payload size 67a, a receiving device can determine the number of bytes associated with the particular content description record payload 69a and use that information to parse the payload from the overall CDF message 60. The content description record payload may include the content package description 50, such as described above with reference to FIG. 5, for the corresponding content package that will be broadcast on the identified content flow ID.

A content package description message will typically specify the broadcast window for each content package broadcast unit in the corresponding content package. Broadcasting particular content within pre-announced broadcast windows enables receiver devices to save battery power by deactivating their receiver until the start of a broadcast window of a selected content package. Therefore, in order for a mobile device 10 to receive and process this information in time to receive a selected content in its broadcast window, the content package description should be broadcast on the content description flow prior to the broadcast window of the corresponding content package broadcast unit. The timing relationship between content package description broadcasts on the content description flow and the corresponding content packages broadcast on the content flow is illustrated in FIG. 7. A content package description 50 may include information regarding the start time, broadcast address or flow ID, nature of the content, and other information about the content which enables the mobile device to identify and receive selected content when it is broadcast. For example, as illustrated in FIG. 7, a package description 50 may include a plurality of CPBU informations that provide information about each of a plurality of content package broadcast units CPBU 1, 2, 3 within a content packet 40 that will be broadcast at indicated times. Thus, a first CPBU 1 information may provide information regarding a first CPBU 1 that is being broadcast or will be broadcast in the future, such as its start time, broadcast address, title, subject matter, format, creation date/time, duration, parental rating, etc. Similarly, the second and third CPBU 2, 3 informations provide information regarding second and third CPBUs 2, 3.

In order to efficiently communicate content information in a reliable communication package, content package description messages may generated according to an information processing algorithm that condenses the content information and formats it into a broadcast format that can be received with low error rates even in a noisy environment.

As illustrated in FIG. 7, the content package description 50 is broadcast on the content description flow ahead of the time that the corresponding content package 40 is broadcast on the content flow. This enables a receiver device to receive the content description message, decrypt the message, review the information regarding individual content packet broadcast units to determine if any match user content selections, and received any content package broadcast units that match user selections.

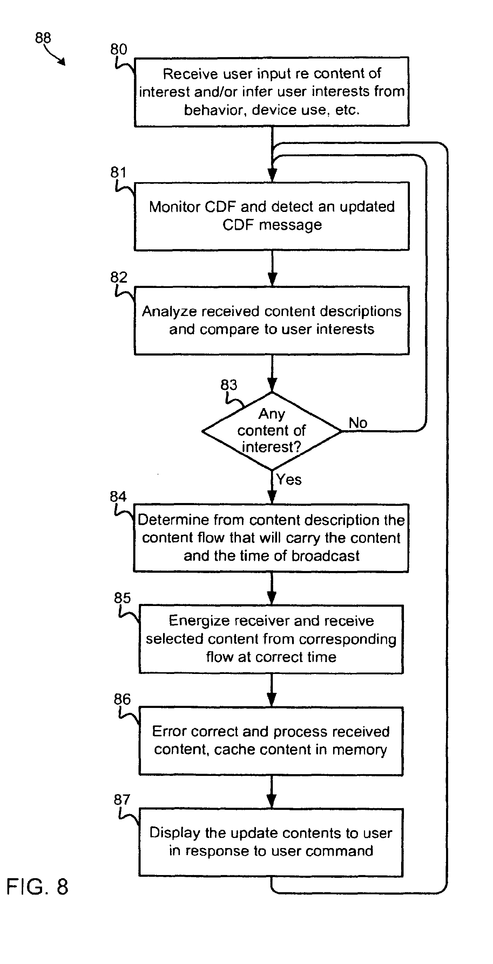

An example method 88 that may be implemented in a mobile device 10 for receiving content determined to be of interest to a user is illustrated in FIG. 8. At any time the mobile device may receive user inputs indicating a type of content of interest, such as in the form of key entries responding to a graphical user interface display of content options, step 80. Alternatively or in addition, the mobile device 10 may infer content of interest to the user based upon information about the user known to or determined by the mobile device 10. For example, if the mobile device 10 determines from a pattern of use that the user drives to work at a particular time each day, the mobile device 10 may infer that the user may be interested in traffic related content at that time of day. As another example, if a user frequently accesses a particular Internet website, the mobile device 10 may infer that the user is interested in receiving that website on a regular basis and identify its URL as content of interest. Such information may be inferred from a user profile maintained in memory of the mobile device 10. Using the received or inferred user content interests, the mobile device 10 may monitor information in the content description flow step 81. As mentioned above, CDF messages may be broadcast repeatedly, such as once every 1 to 2 seconds, so part of the process of monitoring the content description flow in step 81 may be detecting whether a particular content packet description message is new or the same as a previously received message. When a new content packet description message is received from the content description flow, the mobile device 10 may analyze the received information and compare the content descriptions to the user's interests, step 82, to determine if any of the content is of interest to the user, determination 83. If none of the contents in the content package described in the received content package description message match a user interest (i.e., determination 83 = "No"), the mobile device 10 may continue to monitor the content description flow by returning to step 81. On the other hand, if one or more contents in the content package described by the received content package description message matches a user interest (i.e., determination and 83 = "Yes"), the mobile device 10 may prepare to receive the selected content by determining from the content description the particular content flow which will carry the selected content, as well as the time of the broadcast window, step 84. At the start of the broadcast window for the selected content the mobile device 10 may energize its receiver and received the selected content from the corresponding flow, step 85. The received content may be processed by the mobile device 10 to detect and correct any errors in transmission, decode any encrypted content and store the content in cache memory, step 86. With the selected content processed and stored in memory, the mobile device 10 may then display the contents to the user at any time, such as in response to a user request for the content. For example, the mobile device 10 may be configured by the user to download updates of a particular Internet website (e.g., www. CNN.com) so that the latest version of the website is stored in memory. Then when a user requests display of that website, the contents are pulled from memory and immediately presented on the display, thus appearing to provide instant access to the website. In some implementations, the received content may be immediately displayed, such as when the requested content is for a particular television program.

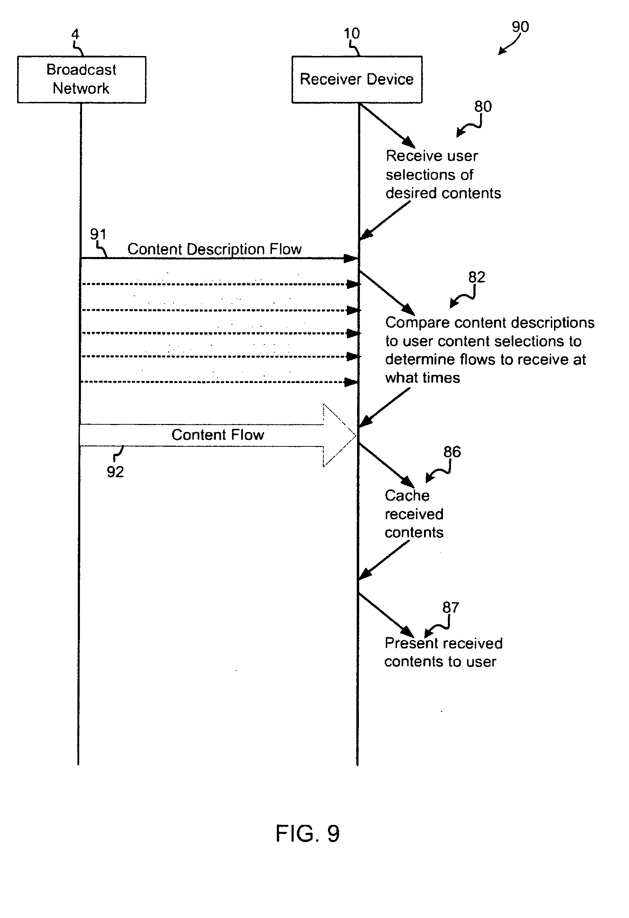

This processing of signals by a mobile device 10 is illustrated further in FIG. 9 which shows process flow 90. As mentioned above, a receiver device 10 may receive user selections of desired contents step 80 which enable the receiver device 10 to evaluate a received content description flow message 91. As mentioned above, content packet description messages transmitted on the content description flow 91 will typically be broadcast repeatedly although a mobile device 10 needs only to receive one such message. The receiver device 10 compares the received content descriptions from the content description flow 91 to the user content selections to determine if there any flows that it should receive and the times for such reception, step 82. If any content flows are selected for reception, the receiver device 10 activates the receiver to receive those particular content flows 92, which are processed and cached in memory, step 86. Finally the cached content is presented to the user in step 87.

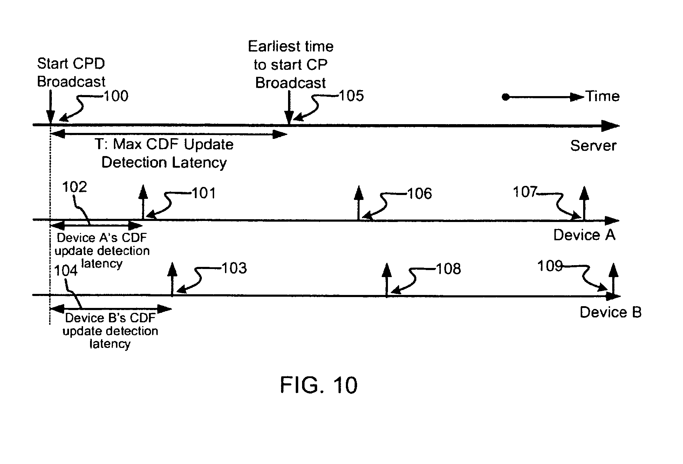

One consideration in the design of a mobile multimedia broadcast system according to the various embodiments is the timing between the broadcast of content packet description messages and the earliest time that broadcast can begin of the corresponding content package. Factors that should be considered in this determination are illustrated in FIG. 10. Mobile devices may be configured to conserve energy by periodically energizing their receiver circuitry for brief periods to monitor the content description flow since the content descriptions may change relatively infrequently. When a mobile multimedia broadcast network begins to broadcast a content package description message at time 100, such messages may not be received by mobile devices until the next time they activate their receiver circuitry, which may be timed to occur periodically such as at times 101, 106, 107. Thus, a content packet description message that begins to be broadcast at time 100 may not be received by a first mobile device A until time 101, resulting in an update detection latency 102. Another mobile device B may activate its receiver circuitry at different times 103, 108, 109, so its content description flow update detection latency 104 may be different from that of mobile device A. Since mobile devices may periodically monitor the content description flow at different times within the update frequency, a mobile multimedia broadcast network must provide for a maximum content description flow update detection latency T that is equal to the interval between periodic checks of the content description flow by mobile devices.

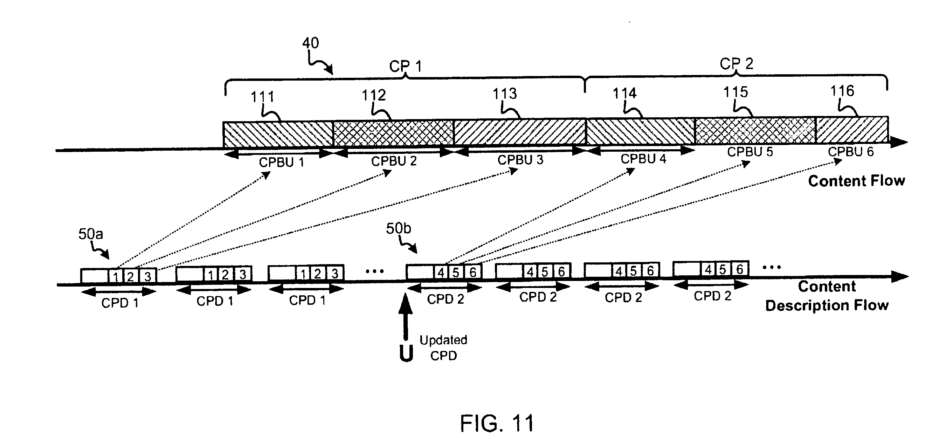

The timing relationship between CDF messages and broadcast content is illustrated in FIG. 11 by the dashed arrows. Since mobile devices 10 may be turned on at any time, the CDF messages are broadcasted repeatedly on a regular basis, such as every one to two seconds, as illustrated in FIG. 11. Thus, when a mobile device 10 is turned on, it only needs to wait for the next transmission of the CDF message 50a to receive information about the current and upcoming broadcast content package 1. Then, since the CDF messages are repeated, there is no need for the mobile device 10 to monitor the content description flow continuously once one message has been received, so mobile devices 10 may de-energize their receiver circuitry.

When a new content package 2 is to be broadcast, mobile multimedia broadcast service providers will transmit a new or updated CDF message 50b. That new CDF message may be continuously broadcast in the content description flow until the next CDF message is broadcast.

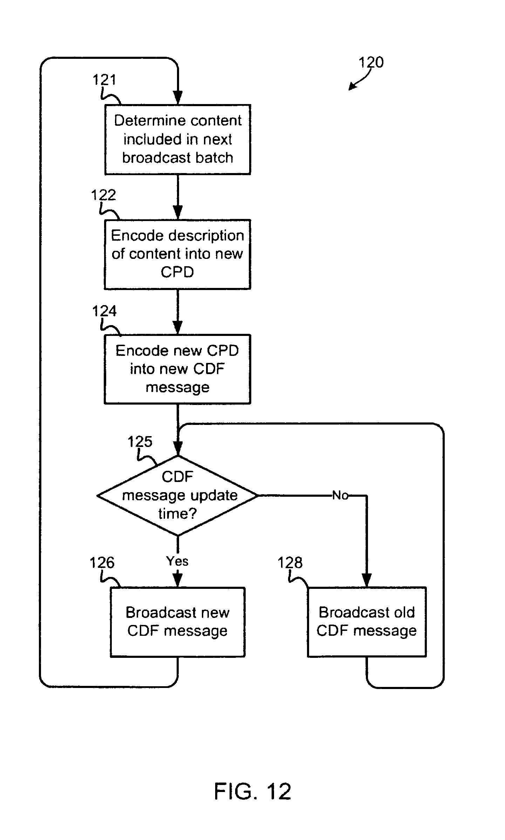

An example embodiment method 120 by which a server within a mobile multimedia broadcast network may create and broadcast CDF messages is illustrated in FIG. 12. Knowing the content broadcast schedule, the server can determine the nature of the content included in the next broadcast batch, step 121. The server may then encode descriptive information regarding that content into a new CPD, step 122. The server may then encode the new CPD into a new CDF message, step 124. For example, the server may generate a message formatted as described above with reference to FIG. 6. With the new (i.e., updated) CDF message ready for transmission, the server may determine whether it is time to begin broadcasting the new CDF message, determination 125. If it is not yet time to transmit the new CDF message (i.e., determination 125 = "No"), the server may continue to broadcast the current CDF message over the content description flow, step 128. When the server determines that it is time to transmit the new CDF message (i.e., determination 125 = "Yes"), the server may send the new content description message to the broadcast network for broadcast over the content description flow, step 126. The server then may return to step 121 to generate the next CDF message and repeat the processes described above.

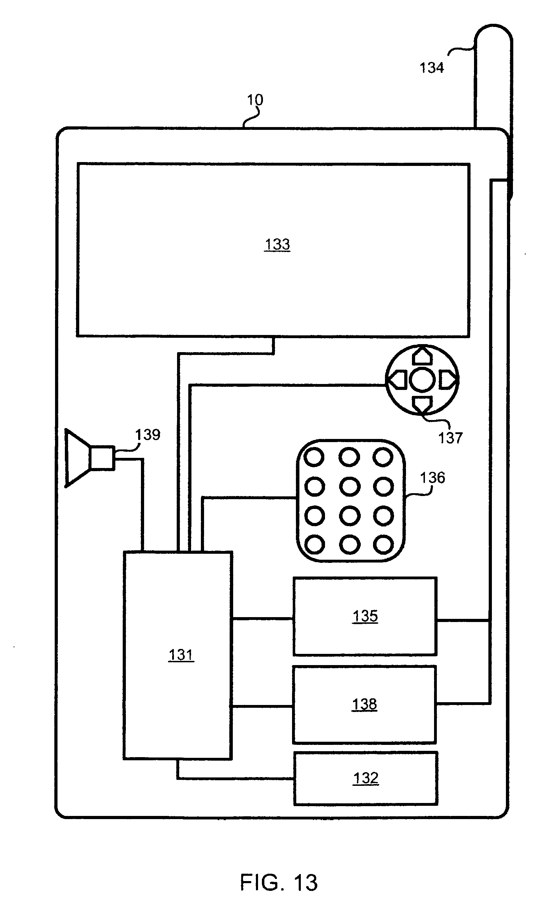

Typical mobile devices 10 suitable for use with the various embodiments will have in common the components illustrated in FIG. 13. For example, an exemplary mobile device 130 may include a processor 131 coupled to internal memory 132, a display 133, and to a speaker 139. Additionally, the mobile device 10 may have an antenna 134 for sending and receiving electromagnetic radiation that is connected to a wireless data link and/or cellular telephone transceiver 135 coupled to the processor 131 and a mobile multimedia broadcast receiver 138 coupled to the processor 131. Mobile devices typically also include a key pad 136 or miniature keyboard and menu selection buttons or rocker switches 137 for receiving user inputs.

The processor 131 may be any programmable microprocessor, microcomputer or multiple processor chip or chips that can be configured by software instructions (applications) to perform a variety of functions, including the functions of the various embodiments described herein. In some mobile devices, multiple processors 131 may be provided, such as one processor dedicated to wireless communication functions and one processor dedicated to running other applications. Typically, software applications may be stored in the internal memory 132 before they are accessed and loaded into the processor 131. In some mobile devices, the processor 131 may include internal memory sufficient to store the application software instructions. In some mobile devices, the secure memory may be in a separate memory chip coupled to the processor 131. In many mobile devices 10, the internal memory 132 may be a volatile or nonvolatile memory, such as flash memory, or a mixture of both. For the purposes of this description, a general reference to memory refers to all memory accessible by the processor 131, including internal memory 132, removable memory plugged into the mobile device, and memory within the processor 131 itself.

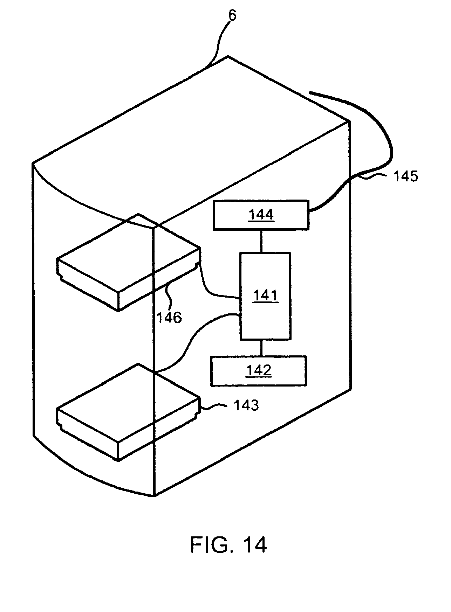

A number of the embodiments described above may also be implemented with any of a variety of commercially available remote server devices, such as the server 6 illustrated in FIG. 14. Such a server 6 typically includes a processor 141 coupled to volatile memory 142 and a large capacity nonvolatile memory, such as a disk drive 143. The server 6 may also include a floppy disc drive and/or a compact disc (CD) drive 146 coupled to the processor 141. The server 106 may also include network access ports 144 coupled to the processor 141 for establishing data connections with a network 145, such as the Internet.

The foregoing embodiments enable a new personalized contents delivery service beyond that of traditional linear broadcast TV to devices in a very power efficient manner. With this service, various kinds of contents such as video clips, RSS, podcasts, web page packages , stock updates, targeted advertisements, etc. are broadcasted together to the receiver devices with meta-data describing the contents and specifying their respective broadcast windows (i.e., the period in which the contents are broadcast). The receiver device allows the user to specify the kinds of contents (e.g., sports news, financial news, movie trailers, YouTube featured videos and etc.) he/she is interested in receiving. Alternatively the receiver device may automatically determine contents that match the user's interest based on the user's profile. Then the receiver device selects the contents that match the user's interests based on the content's meta-data received in CDF messages, and receives the selected content within their broadcast windows. The contents can be automatically updated and saved on the receiver device. The various embodiments enable personalized content delivery in a broadcast system, which affords the following advantages: efficient content delivery since personalized contents delivery can be provided efficiently using broadcast networks to deliver the same contents to a large number of users; a smooth user experience since the personalized contents are automatically updated and saved so the saved contents are instantly available to the user (i.e., the user experiences no download delay); high power efficiency because the receiver device only activates the receiver circuitry to receive the contents that match the user's interest within the broadcast windows of such content; and delivery of up to date contents because the contents can be dynamically updated.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In one or more exemplary aspects, the functions described may be implemented in hardware, software, firmware, or any combination thereof. If implemented in software, the functions may be stored on or transmitted over as one or more instructions or code on a computer-readable medium. The steps of a method or algorithm disclosed herein may be embodied in a processor-executable software module executed which may reside on a computer-readable medium. Computer-readable media includes both computer storage media and communication media including any medium that facilitates transfer of a computer program from one place to another. A storage media may be any available media that may be accessed by a computer. By way of example, and not limitation, such computer-readable media may comprise RAM, ROM, EEPROM, CD-ROM or other optical disk storage, magnetic disk storage or other magnetic storage devices, or any other medium that may be used to carry or store desired program code in the form of instructions or data structures and that may be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disk, as used herein, includes compact disc (CD), laser disc, optical disc, digital versatile disc (DVD), floppy disk, and blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a machine readable medium and/or computer-readable medium, which may be incorporated into a computer program product.

The preceding description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention. Thus, the present invention is not intended to be limited to the embodiments shown herein but is to be accorded the widest scope consistent with the following claims and the principles and novel features disclosed herein.

## Claims

1. A method for broadcasting content in a mobile multimedia broadcast system, comprising:
determining (121) content to be included in a content package for broadcast by the mobile multimedia broadcast system;
encoding (122) description information regarding the content to be broadcast in a content package description unit;
encoding (124) the content package description unit within a content description flow message, the content description flow message including a time of broadcast of the content package;
broadcasting (126) the content description flow message within a content description flow portion of the mobile multimedia broadcast transmission; and
broadcasting the content package within a content flow portion of the mobile multimedia broadcast transmission at the time of broadcast included within the content description flow message, wherein the content flow portion of the mobile multimedia broadcast transmission is separate from the content description flow portion of the mobile multimedia broadcast transmission.

2. The method of claim 1, wherein the content description flow portion of the mobile multimedia broadcast transmission is dedicated to carrying overhead information and the content flow portion of the mobile multimedia broadcast transmission is dedicated to carrying content.

3. The method of claim 1 or claim 2, further comprising:
receiving the content description flow message within the content description flow portion of the mobile multimedia broadcast transmission;
obtaining the description information regarding the content to be broadcast in the content description flow message;
comparing (82) the description information to user content selections; and
receiving the content package from the content flow portion of the mobile multimedia broadcast transmission when the description information matches user content selections.

4. The method of claim 3, wherein receiving the content package comprises:
determining (84) from the content description flow message a broadcast flow address that will carry the content package;
determining from the content description flow message a broadcast window for the content package;
energizing (85) receiver circuitry at a beginning of the broadcast window for the content package;
receiving the content package from a broadcast flow of the mobile multimedia broadcasts transmission;
caching (86) content within the content package in memory; and
displaying (87) the content to a user.

5. The method of claim 3, further comprising:
receiving a user input identifying a type of content to be received; and
storing the received user input as a user content selection.

6. The method of claim 3, further comprising:
inferring a user content selection based upon a pattern of user activities.

7. The method of claim 4, wherein displaying the content to a user comprises:
receiving a user input requesting access to the content;
recalling the cached content from memory in response to receiving the user input; and displaying the content recalled from memory.

8. A method for a mobile device configured to receive mobile multimedia broadcast services, comprising:
receiving a content description flow message within a content description flow portion of a mobile multimedia broadcast transmission;
obtaining a description information regarding content to be broadcast in the content description flow message;
comparing (82) the description information to user content selections; and
receiving (85), at a broadcast time specified within the content description flow message, a content package from a content flow portion of the mobile multimedia broadcast transmission when the description information matches user content selections, wherein the content flow portion of the mobile multimedia broadcast transmission is separate from the content description flow portion of the mobile multimedia broadcast transmission.

9. The method of claim 8, wherein the method further comprises:
determining (84) from the content description flow message a broadcast flow address that will carry the content package;
determining from the content description flow message a broadcast window for the content package;
energizing (85) a mobile multimedia broadcast receiver at a beginning of the broadcast window for the content package;
receiving the content package from a broadcast flow of the mobile multimedia broadcast transmission;
caching (86) content within the content package in a memory; and
displaying the content to a user.

10. The method of claim 8, further comprising:
receiving a user input identifying a type of content to be received; and
storing the received user input in the memory as a user content selection.

11. The method of claim 8, further comprising:
inferring a user content selection based upon a pattern of user activities.

12. The method of claim 9, wherein displaying the content to a user comprises:
receiving a user input requesting access to the content;
recalling the cached content from the memory in response to receiving the user input; and
generating a display of the content recalled from memory.

13. The method of any of claims 8 to 12, wherein the content description flow portion of the mobile multimedia broadcast transmission is dedicated to carrying overhead information and the content flow portion of the mobile multimedia broadcast transmission is dedicated to carrying content

14. An apparatus comprising means for performing a method according to any of claims 1 to 13.

15. A computer-readable medium comprising computer-executable instructions for performing a method in accordance with any of claims 1 to 13 when executed on a computer.

## Patentansprüche

1. Ein Verfahren zum Broadcasten von Inhalt bzw. Content in einem mobilen Multimedia-Broadcastsystem, das Folgendes aufweist:
Bestimmen (121) von Content, der in einem Contentpaket zum Broadcasten durch das mobile Multimediabroadcastsystem enthalten sein soll;
Codieren (122) von Beschreibungsinformation in Bezug auf den Content, der in einer Contentpaketbeschreibungseinheit gebroadcastet werden soll;
Codieren (124) der Contentpaketbeschreibungseinheit innerhalb einer Contentbeschreibungsflussnachricht, wobei die Contentbeschreibungsflussnachricht einen Zeitpunkt des Broadcastens des Contentpakets beinhaltet;
Broadcasten (126) der Contentbeschreibungsflussnachricht innerhalb eines Contentbeschreibungsflussabschnitts der mobilen Multimediabroadcastübertragung; und
Broadcasten des Contentpakets in einem Contentflussabschnitt der mobilen Multimediabroadcastübertragung zum Zeitpunkt des Broadcastens, der in der Contentbeschreibungsflussnachricht enthalten ist, wobei der Contentflussabschnitt der mobilen Multimediabroadcastsendung separat vorliegt vom Contentbeschreibungsflussabschnitt der mobilen Multimediabroadcastübertragung.

2. Verfahren nach Anspruch 1, wobei der Contentbeschreibungsflussabschnitt der mobilen Multimediabroadcastsendung vorgesehen ist zum Tragen von Overhead-Information und wobei der Contentflussabschnitt der mobilen Multimediabroadcastübertragung vorgesehen ist zum Tragen von Content.

3. Verfahren nach Anspruch 1 oder Anspruch 2, das weiter Folgendes aufweist:
Empfangen der Contentbeschreibungsflussnachricht im Contentbeschreibungsflussabschnitt der mobilen Multimediabroadcastübertragung;
Erlangen der Beschreibungsinformation bezüglich des Content, der in der Contentbeschreibungsflussnachricht gebroadcastet werden soll;
Vergleichen (82) der Beschreibungsinformation mit Nutzercontentauswahlen; und
Empfangen des Contentpakets aus dem Contentflussabschnitt der mobilen Multimediabroadcastübertragung, wenn die Beschreibungsinformation zu Nutzercontentauswahlen passt bzw. mit diesen übereinstimmt.

4. Verfahren nach Anspruch 3, wobei das Empfangen des Contentpakets Folgendes aufweist:
Bestimmen (84), aus der Contentbeschreibungsflussnachricht, einer Broadcastflussadresse, die das Contentpaket tragen wird;
Bestimmen, aus der Contentbeschreibungsflussnachricht, eines Broadcast-Fensters für das Contentpaket;
Versorgen (85) der Empfängerschaltung mit Energie zu Beginn des Broadcast-Fensters für das Contentpaket;
Empfangen des Contentpakets aus einem Broadcastfluss der mobilen Multimediabroadcastübertragung;
Cachen (86) des Contents in dem Contentpaket im Speicher; und
Anzeigen (87) des Contents für einen Nutzer.

5. Verfahren nach Anspruch 3, das weiter Folgendes aufweist:
Empfangen einer Nutzereingabe, die eine Art von Content identifiziert, der empfangen werden soll; und
Speichern der empfangenen Nutzereingabe als eine Nutzercontentauswahl.

6. Verfahren nach Anspruch 3, das weiter Folgendes aufweist:
Ableiten einer Nutzercontentauswahl basierend auf einem Muster von Nutzeraktivitäten.

7. Verfahren nach Anspruch 4, wobei das Anzeigen des Contents für einen Nutzer Folgendes aufweist.
Empfangen einer Nutzereingabe, die Zugriff auf den Content anfordert; Abrufen des gecachten Contents aus dem Speicher ansprechend auf das Empfangen der Nutzereingabe; und
Anzeigen des Contents, der aus dem Speicher abgerufen wird.

8. Ein Verfahren für eine Mobileinrichtung, das konfiguriert ist zum Empfangen von mobilen Multimediabroadcastdiensten, das Folgendes aufweist:
Empfangen einer Contentbeschreibungsflussnachricht in einem Contentbeschreibungsflussabschnitt einer mobilen Multimediabroadcastübertragung;
Erlangen von Beschreibungsinformation bezüglich des Contents, der in der Contentbeschreibungsflussnachricht gebroadcastet werden soll;
Vergleichen (82) der Beschreibungsinformation mit Nutzercontentauswahlen; und
Empfangen (85), zu einem Broadcastzeitpunkt, der in der Contentbeschreibungsflussnachricht spezifiziert ist, eines Contentpakets aus einem ContentFlussabschnitt der mobilen Multimediabroadcastübertragung, wenn die Beschreibungsinformation zu Nutzercontentauswahlen passt bzw. mit diesen übereinstimmt, wobei der Contentflussabschnitt der mobilen Multimediabroadcastübertragung separat vorliegt vom Contentbeschreibungsflussabschnitt der mobilen Multimediabroadcastübertragung.

9. Verfahren nach Anspruch 8, wobei das Verfahren weiter Folgendes aufweist:
Bestimmen (84), aus der Contentbeschreibungsflussnachricht, einer Broadcastflussadresse, die das Contentpaket tragen wird;
Bestimmen, aus der Contentbeschreibungsflussnachricht, eines Broadcast-Fensters für das Contentpaket;
Versorgen (85) eines mobilen Multimediabroadcastempfängers mit Energie zu Beginn des Broadcast-Fensters für das Contentpaket;
Empfangen des Contentpakets aus einem Broadcastfluss der mobilen Multimediabroadcastübertragung;
Cachen (86) des Contents in dem Contentpaket in einem Speicher; und
Anzeigen des Contents für einen Nutzer.

10. Verfahren nach Anspruch 8, das weiter Folgendes aufweist:
Empfangen einer Nutzereingabe, die eine Art von Content, der empfangen werden soll, identifiziert; und
Speichern der empfangenen Nutzereingabe in dem Speicher als eine Nutzercontentauswahl,

11. Verfahren nach Anspruch 8, das weiter Folgendes aufweist:
Ableiten einer Nutzercontentauswahl basierend auf einem Muster von Nutzeraktivitäten.

12. Verfahren nach Anspruch 9, wobei das Anzeigen des Content für einem Nutzer Folgendes aufweist:
Empfangen einer Nutzereingabe, die Zugriff auf den Content anfordert;
Abrufen des gecachten Contents aus dem Speicher ansprechend auf das Empfangen der Nutzereingabe; und
Generieren einer Anzeige des Contents, der aus dem Speicher abgerufen wird.

13. Verfahren nach einem der Ansprüche 8 bis 12, wobei der Contentbeschreibungsflussabschnitt der mobilen Multimediabroadcastübertragung vorgesehen ist zum Tragen von Overhead-Information und der Contentflussabschnitt der mobilen Multimediabroadcastübertragung vorgesehen ist zum Tragen von Content.

14. Eine Vorrichtung, die Mittel aufweist zum Durchführen eines Verfahrens nach einem der Ansprüche 1 bis 13.

15. Ein computerlesbares Medium, das computerlesbare Instruktionen aufweist zum Durchführen eines Verfahrens nach einem der Ansprüche 1 bis 13, wenn diese auf einem Computer ausgeführt werden.

## Revendications

1. Procédé de diffusion de contenu dans un système de diffusion multimédia mobile, comprenant:
la détermination (121) d'un contenu à inclure dans un paquet de contenu pour une diffusion par le système de diffusion multimédia mobile ;
le codage (122) d'informations de description concernant le contenu qui sera diffusé dans une unité de description de paquet de contenu ;
le codage (124) de l'unité de description de paquet de contenu dans un message de flux de description de contenu, le message de flux de description de contenu contenant une heure de diffusion du paquet de contenu ;
la diffusion (126) du message de flux de description de contenu dans une partie flux de description de contenu de la transmission de diffusion multimédia mobile ; et
la diffusion du paquet de contenu dans une partie flux de contenu de la transmission de diffusion multimédia mobile à l'heure de diffusion incluse dans le message de flux de description de contenu, la partie flux de contenu de la transmission de diffusion multimédia mobile étant séparée de la partie flux de description de contenu de la transmission de diffusion multimédia mobile.

2. Procédé selon la revendication 1, dans lequel la partie flux de description de contenu de la transmission de diffusion multimédia mobile est dédiée au transport d'informations auxiliaires et la partie flux de contenu de la transmission de diffusion multimédia mobile est dédiée au transport de contenu.

3. Procédé selon la revendication 1 ou la revendication 2, comprenant en outre :
la réception du message de flux de description de contenu présent dans la partie flux de description de contenu de la transmission de diffusion multimédia mobile ;
l'obtention des informations de description concernant le contenu qui sera diffusé présentes dans le message de flux de description de contenu ;
la comparaison (82) des informations de description à des sélections de contenu de l'utilisateur ; et
la réception du paquet de contenu à partir de la partie flux de contenu de la transmission de diffusion multimédia mobile quand les informations de description correspondent à des sélections de contenu de l'utilisateur.

4. Procédé selon la revendication 3, dans lequel la réception du paquet de contenu comprend :
la détermination (84), à partir du message de flux de description de contenu, d'une adresse de flux de diffusion qui contiendra le paquet de contenu ;
la détermination, à partir du message de flux de description de contenu, d'une fenêtre de diffusion pour le paquet de contenu ;
la mise sous tension (85) d'un circuit récepteur au début de la fenêtre de diffusion pour le paquet de contenu ;
la réception du paquet de contenu à partir d'un flux de diffusion de la transmission de diffusion multimédia mobile ;
la mise en cache (86) du contenu présent dans le paquet de contenu dans une mémoire ; et
la présentation (87) du contenu à un utilisateur.

5. Procédé selon la revendication 3, comprenant en outre:
la réception d'une entrée de l'utilisateur identifiant un type de contenu à recevoir ; et
le stockage de l'entrée de l'utilisateur reçue à titre de sélection de contenu de l'utilisateur.

6. Procédé selon la revendication 3, comprenant en outre :
l'inférence d'une sélection de contenu de l'utilisateur sur la base d'un profil d'activités de l'utilisateur.

7. Procédé selon la revendication 4, dans lequel la présentation du contenu à un utilisateur comprend :
la réception d'une entrée de l'utilisateur demandant d'accéder au contenu ;
la récupération du contenu mis en cache depuis la mémoire en réponse à la réception de l'entrée de l'utilisateur; et
la présentation du contenu récupéré depuis la mémoire.

8. Procédé pour un dispositif mobile configuré pour recevoir des services de diffusion multimédia mobile, comprenant :
la réception d'un message de flux de description de contenu présent dans une partie flux de description de contenu d'une transmission de diffusion multimédia mobile ;
l'obtention d'informations de description concernant le contenu qui sera diffusé présentes dans le message de flux de description de contenu ;
la comparaison (82) des informations de description à des sélections de contenu de l'utilisateur ; et
la réception (85), à une heure de diffusion spécifiée dans le message de flux de description de contenu, d'un paquet de contenu à partir d'une partie flux de contenu de la transmission de diffusion multimédia mobile quand les informations de description correspondent à des sélections de contenu de l'utilisateur, la partie flux de contenu de la transmission de diffusion multimédia mobile étant séparée de la partie flux de description de contenu de la transmission de diffusion multimédia mobile.

9. Procédé selon la revendication 8, dans lequel le procédé comprend en outre :
la détermination (84), à partir du message de flux de description de contenu, d'une adresse de flux de diffusion qui contiendra le paquet de contenu ;
la détermination, à partir du message de flux de description de contenu, d'une fenêtre de diffusion pour le paquet de contenu ;
la mise sous tension (85) d'un récepteur de diffusion multimédia mobile au début de la fenêtre de diffusion pour le paquet de contenu ;
la réception du paquet de contenu à partir d'un flux de diffusion de la transmission de diffusion multimédia mobile ;
la mise en cache (86) du contenu présent dans le paquet de diffusion dans une mémoire ; et
la présentation du contenu à un utilisateur.

10. Procédé selon la revendication 8, comprenant en outre :
la réception d'une entrée de l'utilisateur identifiant un type de contenu à recevoir ; et
le stockage de l'entrée de l'utilisateur reçue dans la mémoire à titre de sélection de contenu de l'utilisateur.

11. Procédé selon la revendication 8, comprenant en outre :
l'inférence d'une sélection de contenu de l'utilisateur sur la base d'un profil d'activités de l'utilisateur.

12. Procédé selon la revendication 9, dans lequel la présentation du contenu à un utilisateur comprend :
la réception d'une entrée de l'utilisateur demandant d'accéder au contenu ;
la récupération du contenu mis en cache depuis la mémoire en réponse à la réception de l'entrée de l'utilisateur ; et
la génération d'une présentation du contenu récupéré depuis la mémoire.

13. Procédé selon l'une quelconque des revendications 8 à 12, dans lequel la partie flux de description de contenu de la transmission de diffusion multimédia mobile est dédiée au transport d'informations auxiliaires et la partie flux de contenu de la transmission de diffusion multimédia mobile est dédiée au transport de contenu.

14. Appareil comprenant des moyens pour mettre en oeuvre un procédé selon l'une quelconque des revendications 1 à 13.

15. Support lisible par ordinateur comprenant des instructions exécutables par ordinateur pour mettre en oeuvre un procédé selon l'une quelconque des revendications 1 à 13 lorsqu'elles sont exécutées sur un ordinateur.
